# EUROPÄISCHE PATENTSCHRIFT

(11) **EP 0 456 978 B1**
(45) Veröffentlichungstag und Bekanntmachung des Hinweises auf die Patenterteilung: **24.05.1995**
(21) Anmeldenummer: 91103544.2
(22) Anmeldetag: 08.03.1991
(51) Int. Cl.: B65H 29/02, B65H 20/00

(54) **Greifer für den Transport von Erzeugnissen insbesondere flächigen Erzeugnissen**
Gripper for transporting of products especially of flat products
Pince pour le transport de produits, en particulier de produits plats

(30) Priorität: 11.04.1990 CH 1250/90
(43) Veröffentlichungstag der Anmeldung: 21.11.1991
(73) Patentinhaber: GRAPHA-HOLDING AG, 6052 Hergiswil (CH)
(72) Erfinder: Merkli, Peter, CH-4665 Oftringen (CH); Oppliger, Jean-Claude, CH-8155 Niederhasli (CH)

(56) Entgegenhaltungen:
- EP-A- 0 386 442
- DE-A- 2 518 776
- DE-C- 2 629 528
- GB-A- 1 512 346
- US-A- 4 836 357

## Beschreibung

Die vorliegende Erfindung bezieht sich auf einen Greifer mit einem Laufwerk für einen zum Transportieren flächiger Erzeugnisse wie Druckprodukte bestimmten Transporteur.

Ein nach der EP - A - 0 386 442 (Stand der Technik unter Art. 54(3) EPÜ) bekannter Transporteur weist eine als Laufwerk ausgebildete mittels Führungsrollen an einer Schiene laufenden Gelenkkette mit daran in regelmässigen Abständen befestigten Greifern auf. Die Greifer bestehen aus einer mit der Gelenkkette fest verbundenen Klemmbacke und einer an letzterer schwenkbar gelagerten beweglichen Klemmbacke, welche auf dem Schliess- oder Öffnungsweg eine durch eine gespannte Druckfeder erzeugte Totlage eines Hebelgelenks überwindet. In der Totlage weist die Spannung der Feder einen Maximalwert auf.

Dieser bekannte Transporteur fällt durch seine vielen Einzelteile der Greifer auf und erweist sich durch das vorgespannte Hebelgelenk als stör- und verschleissanfällig.

Aufgabe der vorliegenden Erfindung ist es, einen Greifer der eingangs genannten Art zu verbessern.

Erfindungsgemäss wird diese Aufgabe durch einen Greifer nach den Merkmalen des Patentanspruchs 1 gelöst.

Anhand der beiliegenden schematischen Zeichnung wird die Erfindung beispielsweise erläutert. Es zeigen:
- Fig. 1: einen Querschnitt durch einen Transporteur und
- Fig. 2: eine Ansicht des Transporteurs in Richtung des Pfeiles II in Fig. 1.

Der gezeigte Transporteur dient der Übernahme, dem Transport und der Weitergabe von einzeln, nacheinander oder in Schuppenformation anfallenden Druckprodukten oder ähnlichen flachen Erzeugnissen. Er weist eine Laufbahn 1 auf, die aus einem stangenförmigen, formstabilen Träger 2 mit Flachprofil (vorzugsweise einem Eisenträger) sowie zwei relativ zum Träger 2 leicht verformbaren Kunststoffleisten 3, 4 besteht. Der Träger 2 kann durch mehrere aufeinander liegende und miteinander verbundene, lamellenartige Schichten gebildet sein. Entlang der Laufbahn 1 ist der Träger 2 (wie auch die Kunststoffleisten 3, 4) vorzugsweise in stumpf aneinander stossende Abschnitte unterteilt. Die Kunststoffleisten 3, 4 haben ein U-Profil mit vergleichsweise dickem Steg 5, in dem mittig eine den Schenkeln 6, 7 bzw. 8, 9 abgewandt offene, längsverlaufende Nut 10, 11 angeordnet ist. Die Kunststoffleisten sind mit ihren Nuten 10, 11 nach Art einer Nut-Federverbindung auf die Längsseiten des Trägers 2 aufgesteckt. Diese kraftschlüssige Verbindung kann durch formschlüssige Verbindungselemente unterstützt oder ersetzt werden.

Die einander zugewandten Stegseiten 12, 13 der Kunststoffleisten 3, 4 bilden Lauf- und/oder Führungsflächen für die bewegten Teile des Transporteurs. Je nach der Lage der Laufbahn 1 im Raum haben die Stegseiten Lauf- oder Führungsflächenfunktion (oder beides), so dass in dieser Patentschrift nur der Ausdruck Lauffläche für beide Funktionen gebraucht wird. Dies gilt auch für die einander zugewandten Seitenflächen der Schenkel 6, 7 bzw. 8, 9. Auch diese Seitenflächen können je nach Orientierung der Laufbahn 1 im Raum Laufflächen- und/oder Führungsflächenfunktion haben und werden in dieser Patentschrift bloss mit Laufflächen bezeichnet.

Die Montage einer solchen Laufbahn 1 ist äusserst einfach. Der mit Flachprofil gestaltete Träger 2 wird Abschnitt für Abschnitt längs dem Bahnverlauf verlegt, wobei mit einfachen Mitteln Kurvenstücke in senkrechter und horizontaler Ebene geformt werden können. Ebenso einfach ist eine Verwindung des Trägers 2 um seine Längsachse. Ist er fest montiert, werden längsseits die Kunststoffleisten 3, 4 fest aufgedrückt. Dabei werden sie vorzugsweise über die Stossstellen der Trägerabschnitte hinweggeführt, damit sie gleichzeitig als Verbindungselement für die Trägerabschnitte im Bereich der Stossstellen dienen.

Selbstverständlich kann der Metallträger 2 statt eines Flachprofils ein U-, Kreuz- oder anderes Profil aufweisen, das rippenartige Längsränder bildet, auf welche Kunststoffleisten aufrastbar oder nach Art einer Nut-Federverbindung aufsteckbar sind. Das Profil der Kunststoffleisten ist dabei so zu wählen, dass es die gewünschten Laufflächenpaare bildet.

Längs der Laufbahn 1 wirkt ein Zugorgan 14 in Form eines Bandes oder sonstigen Stranges, beispielsweise eines Seils. Besonders geeignet sind Bänder aus Kunststoff oder Gummi mit textiler Verstärkungseinlage, wie sie auf dem Markt als Förderbänder angeboten werden. Wesentlich ist, dass das Band 14 unter der auftretenden Zugkraft weder reisst noch sich unzulässig dehnt. Es muss zudem leicht biegsam und um seine Längsachse in einem Winkel von wenigstens näherungsweise ± 90° verwindbar sein.

Mit regelmässigem Abstand sind am Zugorgan 14 Laufwerke 15 befestigt. Diese weisen einen U-förmig gebogenen Bügel auf, der aus den beiden Schenkeln 16, 17 und einem Quersteg 18 besteht. Die Schenkel 16, 17 sind breiter als der Quersteg 18 und übergreifen zu gegenüberliegenden Seiten die Laufbahn 1. An jedem Schenkel 16, 17 sind je zwei Rollen 19 frei drehbar gelagert, die zwischen den Schenkeln 6, 7 bzw. 8, 9 der Kunststoffleisten 3, 4 laufen. Der Quersteg 18 ist mit dem Band 14 durch Nieten verbunden und dient als Lager für eine fünfte Rolle 20, die zwischen den Seiten 12, 13 der Kunststoffleisten 3, 4 laufen. Die Rollen 19, 20 wirken je nach Lage der Laufbahn 1 im Raum als Lauf- und/oder Führungsrollen.

Der Schenkel 17 bildet einen über den Steg 18 vorstehenden Fortsatz 21 und ist in der Mitte des freien Endes mit einer einen Anschlag 22 bildenden Ausbiegung versehen.

Am Schenkel 17 ist ein Lagerkörper 23 fest angebracht, der zwei durch einen runden Zapfen 24 verbundene Lagerrippen 25 bildet. Die Mantelfläche 26 des Zapfens 24 dient, wie später beschrieben, als Kurvenfläche für die Betätigung einer beweglichen Klemmbacke 27. Weiter sind die Lagerrippen 25 von einer Schwenkwelle 28 durchsetzt, deren über die Lagerrippen 25 vorstehende Enden geschlitzt sind.

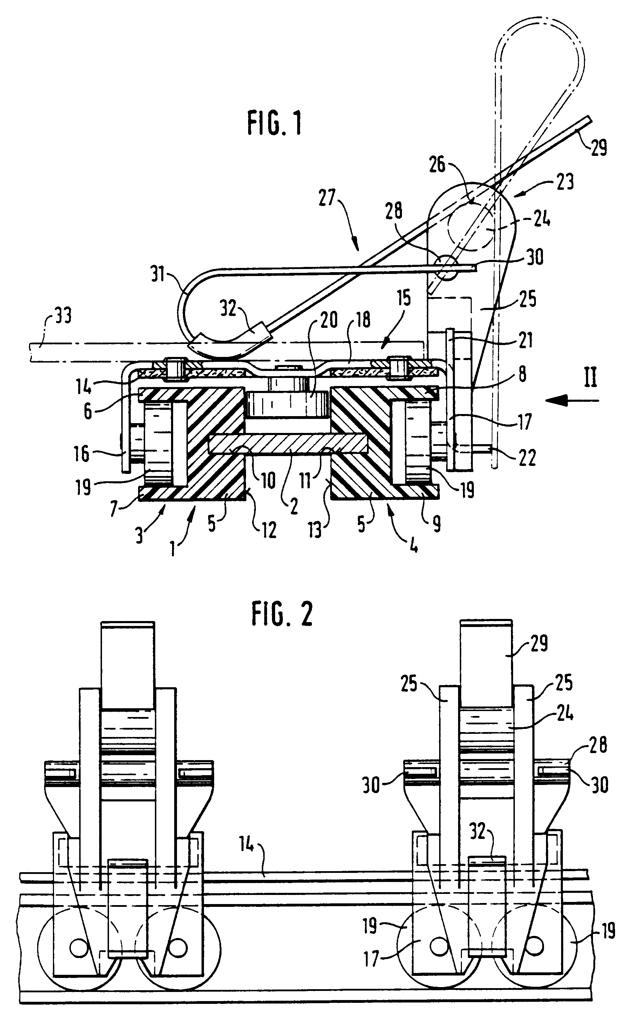

Als bewegliche Klemmbacke 27 wirkt eine mit ihren Schenkeln über Kreuz gebogene Blattfeder. Sie ist vorzugsweise einstückig gefertigt und weist ein verjüngtes schmäleres Ende 29, ein gegabeltes Ende 30 sowie einen Bogen 31 auf. Die gegabelten Enden 30 sind in den Endschlitzen der Schwenkwelle 28 kraftschlüssig gehalten. Das verjüngte Ende 29 liegt mit Vorspannung auf der vom Zapfen 24 gebildeten Führungsfläche 26. In der Folge wird die bewegliche Klemmbacke 27 durch Federkraft in der mit ausgezogenen und strichpunktiert gezeichneten Endlagen gehalten. Von diesen ist die mit ausgezogenen Strichen gezeichnete Lage die Schliessstellung, wogegen die strichpunktierten Linien die Offenstellung bezeichnen. Wird die bewegliche Klemmbacke 27 von einer Stellung in die andere verschwenkt, wobei sich die Schwenkwelle 28 mitdreht, überschreitet die Federkraft bei der Totlage einen Maximalwert. In der Totlage ist wie aus Fig. 1 ersichtlich die Distanz zwischen der Achse der Schwenkwelle 28 und der Auflagelinie des verjüngten Endes 29 der beweglichen Klemmbacke 27 auf der Mantelfläche 26 des Zapfens 24 am grössten. Mit der beweglichen Klemmbacke 27 wirkt der Quersteg 18 des Laufwerkes 15 als feste Klemmbacke zusammen, wobei der Bogen 31 der beweglichen Klemmbacke 27 mit einer elastischen Manschette 32 versehen ist. Zwischen den beiden Klemmbacken werden Druckprodukte 33 während des Transportes festgeklemmt. Beim Rücklauf des Transporteurs von der Abgabestelle für die Druckprodukte zur Übernahmestelle befinden sich die beweglichen Klemmbacken in der Offenstellung. Bei der Übernahmestelle laufen die Druckprodukte 33 und die Querstege 18 der Laufwerke 15 tangential gegeneinander. Sobald die Druckprodukte 33 gegen die Stege 18 anliegen, läuft der Bogen 31 der beweglichen Klemmbacke 27 gegen eine ortsfeste (nicht dargestellte) Kurve, welche sie über die Totlage schwenkt, so dass sie gegen den zugehörigen Steg 18 schnellt und das oder die darauf liegenden Druckprodukte festklemmt. An der Abgabestelle wiederum untergreift eine ortsfeste Kurve die in der Schliesslage befindliche, bewegliche Klemmbacke 27 und schwenkt sie über die Totlage zurück, bis sie selbständig in die Offenstellung schwenkt, in der ihr freies Ende gegen den Anschlag 22 anliegt.

Durch den Umstand, dass der Steg 18 des Laufwerks 15 die feste Klemmbacke der Greifzange bildet und die bewegliche Klemmbacke 27 in der Offenstellung sich vollständig seitlich neben dem Transporteur befindet, besteht im Übernahme- und Abgabebereich der Druckprodukte 33 eine grosse Freiheit in der Art und Weise, wie die Zu- und Abförderer an den Transporteur herangeführt bzw. von diesem weggeführt werden.

## Patentansprüche

1. Greifer mit einem Laufwerk für einen zum Fördern flächiger Erzeugnisse wie Druckprodukte bestimmten Transporteur, mit einer mit dem Laufwerk (15) fest verbundenen Klemmbacke (18) und einer beweglichen Klemmbacke (27), die von einer Feder (29, 30, 31) beaufschlagt ist und beim Öffnen und Schliessen eine Totlage überwindet, in welcher die Spannung der Feder einen Maximalwert aufweist, und wobei die Feder eine Blattfeder (29, 30, 31) ist, die bewegliche Klemmbacke (27) schwenkbar an der festen Klemmbacke (18) gelagert und in allen Schwenklagen mit der vorgespannten Blattfeder (29, 30, 31) auf einer mit der festen Klemmbacke (18) fest verbundenen Kurvenfläche (26) abgestützt ist und die Blattfeder (29, 30, 31) die bewegliche Klemmbacke (27) sowohl in der Schliess- als auch in der Offenstellung hält.

2. Greifer nach Anspruch 1, dadurch gekennzeichnet, dass die bewegliche Klemmbacke (27) einstückig aus Balttfedermaterial geformt ist und die Blattfeder (29, 30, 31) bildet.

3. Greifer nach Anspruch 2, dadurch gekennzeichnet, dass die bewegbare Klemmbacke (27) aus einem gebogenen, mit den Schenkeln (29, 30) sich kreuzenden Blattfedermaterialstreifen gebildet ist, dass ferner der eine Schenkel (29) verjüngt ist und der andere Schenkel (30) eine Gabel bildet, wobei der verjüngte Schenkel (29) zwischen der Gabel hindurchgreift, und dass die Gabelenden des Schenkels (30) schwenkbar an der festen Klemmbacke (18) gelagert sind und der verjüngte Schenkel (29) auf der Kurvenfläche (26) abgestützt ist.

4. Greifer nach einem der Ansprüche 1 bis 3, dadurch gekennzeichnet, dass sich die bewegliche Klemmbacke (27) in ihrer Offenstellung seitlich neben dem Laufwerk (15) befindet.

## Claims

1. Gripper with running gear for a conveyor designed for carrying platelike articles such as printed products, comprising a clamping jaw (18) which is fixedly joined to the running gear (15) and a mobile clamping jaw (27) which is acted on by a spring (29, 30, 31) and which during opening and closure overcomes a dead-centre position in which the tension of the spring is at a maximum level, the spring being a leaf spring (29, 30, 31), the mobile clamping jaw (27) being swivel-mounted on the fixed clamping jaw (18) and in all swivel positions resting with the pretensioned leaf spring (29, 30, 31) on a cam face (26) fixedly joined to the fixed clamping jaw (18), and the leaf spring (29, 30, 31) holding the mobile clamping jaw (27) both in the closure position and in the opening position.

2. Gripper according to claim 1, characterised in that the mobile clamping jaw (27) is shaped in one piece from leaf spring material and constitutes the leaf spring (29, 30, 31).

3. Gripper according to claim 2, characterised in that the mobile clamping jaw (27) is constituted by a bent strip of leaf spring material which intersects with the side-pieces (29, 30), that in addition one side-piece (29) is tapered and the other side-piece (30) forms a fork, the tapered side-piece (29) extending out through the fork, and that the fork ends of the side-piece (30) are swivel-mounted on the fixed clamping jaw (18) and the tapered side-piece (29) rests on the cam face (26).

4. Gripper according to any of claims 1 to 3, characterised in that in its open position the mobile clamping jaw (27) is situated laterally alongside the running gear (15).

## Revendications

1. Preneur avec un train de roulement pour un transporteur destiné à transporter des produits plats tels que des produits imprimés, avec un mors de serrage (18) fixement assemblé au train de roulement (15) et un mors de serrage mobile (27), qui est sollicité par un ressort (29, 30, 31) et dépasse, lors de l'ouverture et de la fermeture, une position de point mort dans laquelle la tension du ressort présente une valeur maximale, le ressort étant un ressort à lame (29, 30, 31), le mors de serrage mobile (27) étant monté à pivotement sur le mors de serrage fixe (18) et étant, dans toutes les positions de pivotement, appuyé par le ressort à lame précontraint (29, 30, 31) sur une surface de came (26) fixement assemblée au mors de serrage fixe (18), et le ressort à lame (29, 30, 31) maintenant le mors de serrage mobile (27) tant dans la position fermée que dans la position ouverte.

2. Preneur selon la revendication 1 caractérisé en ce que le mors de serrage mobile (27) est façonné d'une pièce dans du matériau de ressorts à lame et constitue le ressort à lame (29, 30, 31).

3. Preneur selon la revendication 2, caractérisé en ce que le mors de serrage mobile (27) est formé d'une bande coudée de matériau de ressorts à lame dont les branches (29, 30) se croisent, en ce qu'en outre une branche (29) est rétrécie et l'autre branche (30) forme une fourche, la branche rétrécie (29) traversant la fourche entre ses deux parties, et en ce que les extrémités de fourche de la branche (30) sont montées à pivotement sur le mors de serrage fixe (18) et la branche rétrécie (29) s'appuie sur la surface de came (26).

4. Preneur selon l'une des revendications 1 à 3, caractérisé en ce que le mors de serrage mobile (27) se trouve, dans sa position ouverte, sur le côté du train de roulement (15).
